# EUROPÄISCHE PATENTSCHRIFT

(11) **EP 0 603 638 B1**
(45) Veröffentlichungstag und Bekanntmachung des Hinweises auf die Patenterteilung: **12.03.1997**
(21) Anmeldenummer: 93119737.0
(22) Anmeldetag: 08.12.1993
(51) Int. Cl.: F25B 17/08

(54) **Adapter für ein Sorptionssystem und Sorptionsverfahren unter Verwendung dieses Adapters**
Adapter for a sorption system and sorption method using this adapter
Adaptateur pour un système de sorption et méthode de sorption utilisant cet adaptateur

(30) Priorität: 23.12.1992 DE 4243817
(43) Veröffentlichungstag der Anmeldung: 29.06.1994
(73) Patentinhaber: ZEO-TECH Zeolith Technologie GmbH, D-85716 Unterschleissheim (DE)
(72) Erfinder: Maier-Laxhuber, Peter, Dr., D-85716 Unterschleissheim (DE); Richter, Gert, D-80639 München (DE); Becky, Andreas, D-81379 München (DE); Wörz, Reiner, D-80636 München (DE)

(56) Entgegenhaltungen:
- EP-A- 0 543 214
- DE-A- 4 003 107
- DE-A- 4 126 960
- US-A- 4 949 549

## Beschreibung

Die Erfindung betrifft einen Adapter zum Ankoppeln eines Sorptionsmittel-Behälters an eine Sorptionsmitteldampfquelle, sowie ein Sorptionsverfahren unter Verwendung dieses Adapters.

In der Sorptionstechnik unterscheidet man zwischen Absorption und Adsorption. Letztere findet beispielsweise bei festen Adsorptionsstoffen statt. Bekannte Adsorptions-Apparate arbeiten als geschlossene oder offene Systeme. In beiden Systemen wird vom Adsorptionsmittel das Arbeitsmittel exotherm sorbiert. Das sorbierte Arbeitsmittel kommt dabei aus einer Dampfquelle, die sich durch die Verdampfung abkühlt. Da beide Systemvarianten während der Sorptionsphase unter Luftabschluß arbeiten, ist der Systemdruck durch den jeweiligen Verdampfungsdruck des Arbeitsmittels gegeben.

Geschlossene Systeme bleiben auch während der nachfolgenden Desorption unter Luftabschluß. Halboffene Systeme werden hingegen unter Luftzutritt desorbiert.

Bekannte Apparate (siehe z.B. DE-A-40 03 107) nutzen diese Sorptionstechniken zur Erzeugung von Kälte und/oder Wärme. Hierbei ist in einem Sorptionsbehälter eine Sorptionsmittelfüllung enthalten, welche mit der Dampfquelle in Verbindung steht. Zwischen Sorptionsmittelfüllung und Dampfquelle befindet sich ein Ventil, welches im geschlossenen Zustand die Sorptionsreaktion verhindert. Beim Öffnen des Ventiles strömt Arbeitsmitteldampf in die Sorptionsmittelfüllung, sofern ein ausreichendes Vakuum vorhanden ist. Ist dies nicht der Fall, verhindert die eingedrungene Luft eine schnelle Sorptionsreaktion.

Geschlossene Systeme sind, da sie ein permanentes Vakuum erfordern, unflexibel. Da die Sorptionsmittelfüllung und die Dampfquelle fest miteinander verbunden sein müssen und deshalb nicht auswechselbar sind, erlauben geschlossene Apparaturen immer nur eine oder eine geringe Anzahl von Anwendungsmöglichkeiten. Halboffene Systeme sind im Gegensatz hierzu weitaus flexibler, da ein einfacher Austausch von Dampfquelle und Sorptionsmittelbehälter möglich ist.

Halboffene Systeme bestehen demnach aus einem Sorptionsmittel-Behälter, welcher ein Sorptionsmittel enthält, einer Arbeitsmitteldampfquelle und einer Absaugvorrichtung, welche aus dem System Luft und nichtsorbierte Gase absaugt.

Aufgabe der vorliegenden Erfindung ist es, einen Adapter anzugeben, mit dessen Hilfe Sorptionsmittel-Behälter und Arbeitsmitteldampfquellen einfach und in vielfältiger Weise kombiniert werden können.

Gelöst wird diese Aufgabe durch die Merkmale des Patentanspruchs 1.

Mit dem erfindungsgemäßen Adapter, ist ein Ankoppeln von unterschiedlichen Sorptionsmittel-Behältern an unterschiedliche Arbeitsmitteldampfquellen schnell und ohne zusätzliches Werkzeug möglich. Beim Ankoppeln entsteht ein abgeschlossener Strömungskanal für das Strömen von Arbeitsmitteldampf von der Dampfquelle zum Sorptionsmittel, welches im Sorptionsmittel-Behälter eingefüllt ist. Da es sich bei den Dampfquellen um beliebige Gefäße handeln kann, die unterschiedliche Mengen von Arbeitsmittel enthalten, ist es notwendig, zwischen Dampfquelle und Sorptionsmittel-Behälter ein Abscheidemittel zwischenzuschalten, welches verhindert, daß flüssige Arbeitsmittelpartikel von der Dampfströmung mitgerissen werden. Werden flüssige Arbeitsmittelpartikel in die Sorptionsmittelfüllung eingebracht, so ist deren Kapazität schnell erschöpft und eine Kälteerzeugung im Verdampfer stark eingeschränkt.

Als Sorptionsmittel-Behälter eignen sich alle Behältnisse, welche für die Aufnahme eines festen oder flüssigen Sorptionsmittels geeignet sind. Sie sollten vakuumdicht und falls das Sorptionsmittel flüssig ist, auch vakuumfest ausgebildet sein. Weiterhin sollten sie eine Einströmöffnung für den Arbeitsmitteldampf besitzen, welcher mit dem Dichtsitz des Adapters eine vakuumdichte Ankopplung gestattet. Die Sorptionsmittel-Behälter selbst können zusätzliche Heizungen enthalten, um das Sorptionsmittel nach der Sättigung wieder vom Arbeitsmittel zu desorbieren. Sie können auch mit zusätzlichen Wärmetauscherflächen versehen sein, um die bei der Sorptionsreaktion auftretetenden Wärmetönungen an ein äußeres Medium, z.B. Luft, abführen zu können.

Als Sorptionsmittel eignen sich prinzipiell alle in der Kältetechnik bekannten Sorptionsmittel, welche mit einem Arbeitsmittel ein geeignetes Reaktionsstoffpaar bilden. Bei halboffenen Systemen, bei denen das Arbeitsmittel an die Luft abgegeben wird, kommt in erster Linie Wasser als Arbeitsmittel in Frage. Arbeitsmittel wie Alkohole oder Ammoniak sind weniger geeignet.

Als Sorptionsmittel für Wasserdampf sind Zeolith und Silikagel bekannt. Zeolithe haben die Eigenschaft, Wasserdampf sehr schnell und in großen Konzentrationen aufzunehmen. Sie sind damit ein besonders vorteilhaftes Sorptionsmittel für halboffene Systeme, bei denen das Arbeitsmittel Wasser ist. Besonders vorteilhaft sind Zeolith-Typen, welche zwar Wasser-Moleküle, aber keine oder nur in geringem Umfang Luftbestandteile sorbieren. Da derartige Zeolith-Typen beispielsweise keine Stickstoff-Moleküle sorbieren, werden diese bei der späteren Sorption von Wasserdampf auch nicht desorbiert. Die bei der Sorption von Wasserdampf freiwerdenden Luftbestandteile würden das Vakuum zerstören und eine schnelle Reaktion verhindern. In diesen Fällen müßte durch die angeschlossene Absaugvorrichtung nachevakuiert werden.

Als Wasserdampfquelle sind alle Gefäße geeignet, welche eine ausreichende Öffnung für den Arbeitsmitteldampf besitzen und diese Austrittsöffnung mit der Dichtfläche des Adapters eine vakuumdichte Ankopplung erlauben. Damit eignen sich auch beispielsweise alle Gläser mit einem planen Glasrand. Vorteilhaft sind aber auch becherförmige Doppelmantel-Gefäße, welche im Doppelmantel ein sangfähiges Mittel enthalten, welches wäßrige Substanzen, insbesondere Wasser, bindet und einen guten thermischen Kontakt zur Gefäßinnenseite aufweist. Besonders vorteilhaft ist die Verwendung von Gefäßen, welche zur Aufnahme von Behältnissen geeignet sind, deren Außenflächen mit einem saugfähigem Material kontaktiert sind. In Frage kommen hier beispielsweise metallische Getränkedosen, aber auch Glasflaschen, welche mit einem geeigneten, feuchten Mantel umgeben sind. Um den Inhalt dieser Behältnisse abzukühlen, werden sie samt feuchtem Mantel in ein geeignetes Aufnahmegefäß gestellt, dieses mit seiner Öffnung vakuumdicht an die Dichtfläche des Adapters angekoppelt und über eine Absaugvorrichtung Luft und nichtsorbierte Gase aus dem ebenfalls an den Adapter angekoppelten Sorptionsmittel-Behälter abgesaugt. Sobald der Luftdruck unter den Wasserdampfdruck der wäßrigen Substanz gesunken ist, verdampft diese und kühlt sich damit selbst und das mit ihr thermisch verbundene Behältnis ab. Der Wasserdampf strömt durch den Strömungskanal zum Sorptionsmittel-Behälter und wird vom dort befindlichen Sorptionsmittel sorbiert. Dieses wird dabei heiß und gibt seine Wärme über die Sorptionsmittel-Behälterwände wieder ab. Der Anschluß der Absaugvorrichtung muß dabei so gelegt sein, daß nur Luft und nichtsorbierte Gase abgesaugt werden, nicht jedoch der in die Sorptionsmittelfüllung einströmende Wasserdampf.

Sofern es die angeschlossene Absaugvorrichtung erlaubt, kann die wäßrige Substanz durch Verdampfen so weit abgekühlt werden, daß sie erstarrt. Wenn es sich bei der wäßrigen Substanz um reines Wasser handelt, liegt der Erstarrungsdampfdruck bei 6,1 mbar. Die Absaugvorrichtung muß hierfür also einen Druck von weniger als 6,1 mbar erreichen.

Vorteilhaft ist es, den Grundkörper des Adapters scheibenförmig auszubilden und auf der einen Seite den Dichtsitz für den Sorptionsmittel-Behälter und auf der gegenüberliegenden Seite die plane Dichtfläche für das vakuumdichte Ankoppeln der Wasserdampfquelle dampfquelle anzubringen. Da in aller Regel Sorptionsmittel-Behälter und eine zylinderförmige Geometrie aufweisen, wird bei einem scheibenförmigen Adapter sowohl Platz als auch Material eingespart.

Vorteilhaft ist es aber auch, wenn Dichtsitz und Dichtfläche in zwei sich parallel gegenüberliegenden Ebenen angeordnet sind. Sofern der Sorptionsmittel-Behälter als auch die Wasserdampfquelle über geeignete Standflächen verfügen, kann alternativ die Wasserdampfquelle oder der Sorptionsmittel-Behälter als Unterlage dienen. Damit lassen sich sowohl Wasserdampfquellen mit oben liegender als auch mit unten liegender Austrittsöffnung mit demselben Adapter an einen Sorptionsmittel-Behälter ankoppeln.

Vorteilhaft ist es auch, den Adapter mit einer Haltevorrichtung zum Festhalten des Sorptionsmittel-Behälters auszurüsten. Auf diese Weise kann, ohne daß das System unter Unterdruck steht, ein Abfallen des Adapters vom Sorptionsmittel-Behälter verhindert werden. Dies ist besonders dann sinnvoll, wenn der Adapter auch zum Abdecken des Sorptionsmittel-Behälters benutzt wird. Ein Verschließen des Sorptionsmittel-Behälters ist immer dann sinnvoll, wenn die Gefahr besteht, daß bei längerem Offenstehen Luftfeuchtigkeit die Sorptionsfähigkeit des Sorptionsmittels beeinträchtigen würde. In diesem Fall ist es besonders vorteilhaft, wenn das Abscheidemittel ein Tropfenabscheider ist, der den Strömungskanal zum Sorptionsmittel-Behälter verschließen kann.

Um die Arbeitsmitteldampfquelle vom Adapter zu trennen, muß im Falle von Unterdruck-Systemen das System belüftet werden. Besonders vorteilhaft ist es hierzu den Adapter mit einem Belüftungsventil zu versehen, über welches die Arbeitsmitteldampfquelle direkt belüftet wird. Auf diese Weise wird vermieden, daß beispielsweise bei einer Belüftung über die Absaugvorrichtung die einströmende Luft Staubpartikel aus der Sorptionsmittelfüllung in die Dampfquelle mitreißt.

Wie oben dargelegt, werden mittels der Absaugvorrichtung Luft und nichtsorbierte Gase aus der Sorptionsmittelfüllung abgesaugt. Diese enthält hierfür beispielsweise ein Saugrohr, dessen eines Ende in die Sorptionsmittelfüllung ragt und dessen zweites Ende eine Anschlußmöglichkeit für die Absaugvorrichtung aufweist. Beim Wechsel eines Sorptionsmittel-Behälters vom Adapter sind somit immer zwei Anschlüsse zu entkuppeln und beim Anlegen einer neuen Patrone wieder anzukoppeln. Vorteilhafterweise weist der Adapter zu diesen Zweck einen separaten Anschluß für die Absaugvorrichtung auf, damit die Sorptionsmittel-Behälter nur vom Adapter und nicht auch von der Absaugvorrichtung getrennt werden müssen. Bei diesem Anschluß kann es sich erfindungsgemäß um ein Tauchrohr handeln, welches an seinem einen Ende im Adapter fixiert ist und zum Anschluß der Absaugvorrichtung geeignete Anschlußstutzen aufweist und an seinem anderen Ende tief in den Sorptionsmittel-Behälter vordringt, um an geeigneter Stelle Luft und nichtsorbierte Gase abzusaugen. Das Eindringen des Tauchrohres in den Sorptionsmittel-Behälter erfolgt vorteilhafterweise innerhalb des Dichtsitzes und damit durch die Eintrittsöffnung des Arbeitsmitteldampfes in den Sorptionsmittel-Behälter.

Erfindungsgemäß kann aber auch ein Teil der Saugleitung fest mit dem Sorptionsmittel-Behälter verbunden sein und auch mit diesem gewechselt werden. Um dennoch über den Adapter absaugen zu können, ist ein zusätzlicher Sauganschluß vorgesehen, welcher die Saugleitung mit dem Adapter innerhalb des Dichtsitzes verbindet.

In der Zeichnung sind vorteilhafte Ausgestaltungen der Erfindungen dargestellt. Es zeigen:
Fig. 1 einen erfindungsgemäßen Adapter in geschnittener Darstellung zur Verbindung eines Sorptionsmittel-Behälters mit einer Dampfquelle und
Fig. 2 einen weiteren Adapter in geschnittener Darstellung.

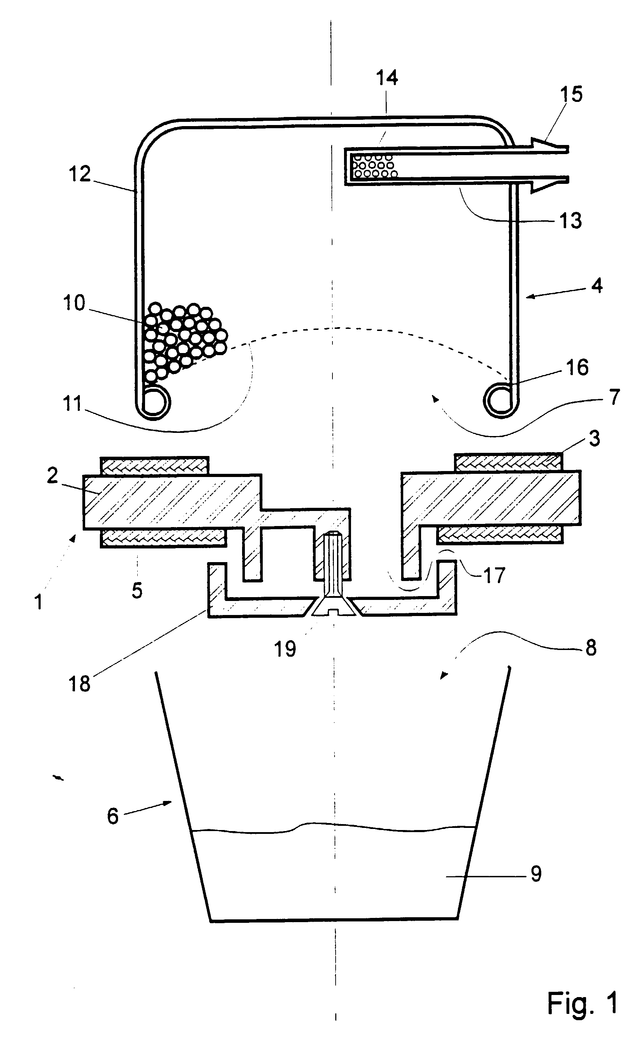

Der Adapter (1) gem. Fig. 1 besteht aus einem scheibenförmigen Grundkörper (2), mit einem Dichtsitz (3) zum vakuumdichten Ankoppeln eines Sorptionsmittel-Behälters (4) und einer Dichtfläche (5) zum vakuumdichten Ankoppeln einer Wasserdampfquelle (6). Dichtsitz (3) und Dichtfläche (5) sind jeweils aus einem planen Weichgummiring gebildet, der sowohl die Eintrittsöffnung (7) des Sorptionsmittel-Behälters(4) als auch die Austrittsöffnung (8) der Arbeitsmitteldampfquelle (6) vakuumdicht mit dem Adapter (1) verbindet. Die Arbeitsmitteldampfquelle (6) ist im unteren Teil mit einer wäßrigen Flüssigkeit (9) gefüllt. Der Sorptionsmittel-Behälter (4) enthält ein Sorptionsmittel (10) in fester granulierter Form. Dieses wird über ein Sieb (11) am Herausfallen aus der Eintrittsöffnung (7) gehindert. Die metallische Hülle (12) des Sorptionsmittel-Behälters (4) wird von einem Saugrohr (13) durchstoßen, dessen inneres Ende mit Löchern (14) und dessen äußeres Ende mit einem Schlauch-Anschlußstutzen (15) versehen ist. An diesem Anschlußstutzen (15) wird eine (nicht dargestellte) Absaugvorrichtung angeschlossen, die über die Löcher (14) das System von Luft und nichtsorbierten Gasen befreit. Das Sieb (11) wird mittels einer Innenbördelung (16) festgehalten.

Der Adapter-Grundkörper (2) weist in der Mitte einen Strömungskanal (17) zur Strömung des Arbeitsmitteldampfes aus der Dampfquelle (6) in den Sorptionsmittel-Behälter (4) auf. Ein Abscheidemittel (18) wird mittels einer Gewindeschraube (19) am Grundkörper (2) so befestigt, daß zusammen mit dem Strömungskanal (17) eine mehrmalige Umlenkung des Arbeitsmitteldampfes erreicht wird. Bei dieser Umlenkung werden mitgerissene Wasserpartikel durch Fliehkräfte abgeschieden und gelangen nicht in die Sorptionsmittelfüllung (10).

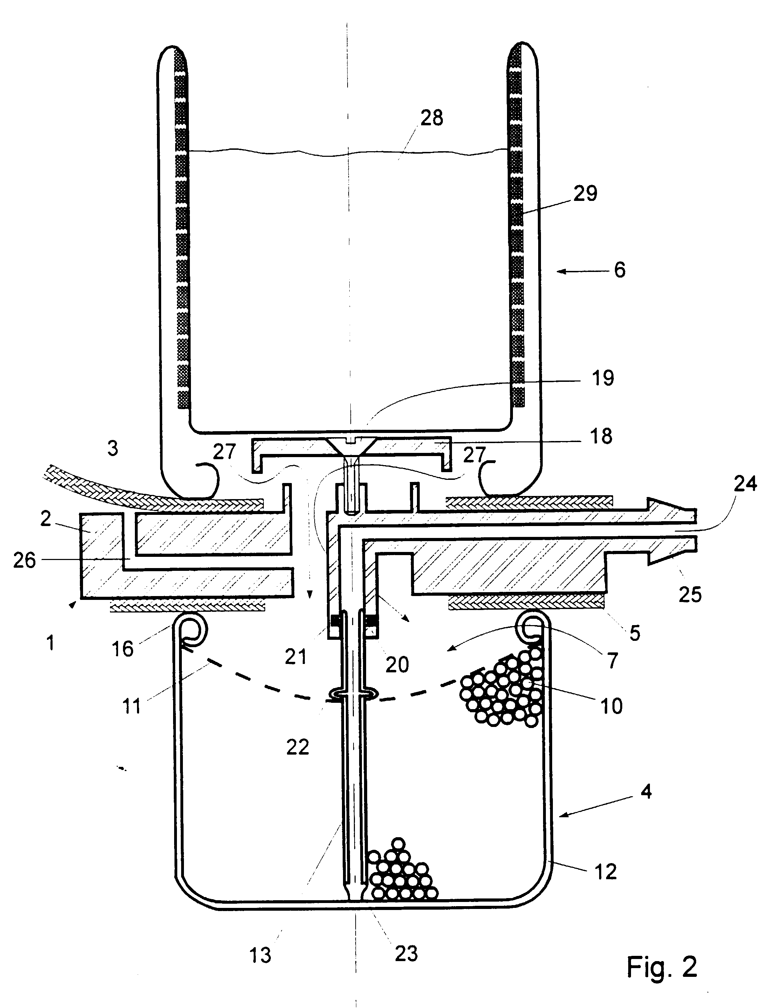

Auch Fig. 2 zeigt einen erfindungsgemäßen Adapter (1), angekoppelt an einen zylindrischen Sorptionsmittel-Behälter (4) und eine ebenfalls zylindrische Wasserdampfquelle (6). Abweichend zu Fig. 1 ist in Fig. 2 die Saugleitung (13) nicht durch die Behälterhülle (12) geführt, sondern mündet in der Eintrittsöffnung (7). Hier wird sie von einem Sauganschluß (20), der eine O-Ringdichtung (21) enthält, aufgenommen und fixiert. Auf diese Weise ist der gesamte Sorptionsmittel-Behälter (4) mit dem Adapter (1) lösbar verbunden. Auch der hier dargestellte Sorptionsmittel-Behälter(4) enthält ein Sieb (11), welches über eine Bördelung (16) und eine Wulst (22) an der Saugleitung (13) fixiert ist. Die Saugleitung (13) ist am Boden des Sorptionsmittel-Behälters (4) verschweißt und mit Öffnungen (23) zum Absaugen von Luft und nichtsorbierter Gase versehen. Diese werden durch die Saugleitung (13) und eine Saugbohrung (24) von einer (nicht gezeigten) Absaugvorrichtung abgesaugt. Diese Absaugvorrichtung kann beispielsweise durch eine (nicht gezeichnete) Schlauchleitung am Anschluß (25) angesteckt werden. Zum Belüften der Wasserdampfquelle (6) dient eine Bohrung (26), welche von der Unterseite der weichen Dichtung des Dichtsitzes (3) verschlossen wird. Zum Belüften des Innenraumes muß lediglich der Dichtsitz (3) an dieser Stelle leicht angehoben werden.

Auch beim Adapter (1) der Ausführungsform gem. Fig. 2, ist ein Abscheidemittel (18) mit einer Schraube (19) am Adapter-Grundkörper (2) so befestigt, daß durch Einschrauben der Schraube (19) das Abscheidemittel (18) auf den Dichtsitz (3) zu liegen kommt und damit den Strömungskanal, der durch die Pfeile (27) angedeutet ist, verschließt. In diesem Zustand kann der Adapter (1) den Sorptionsmittel-Behälter(4) vor dem Zutritt von Luftfeuchtigkeit bewahren.

Die Arbeitsmitteldampfquelle (6) besteht in diesem Ausführungsbeispiel aus einem doppelmanteligen Gefäß, welches ein Getränk (28) enthält, das zur Abkühlung eingefüllt ist. Im Inneren des Gefäß-Doppelmantels, befindet sich auf der innenliegenden Wandfläche ein saugfähiges Mittel (29) in gutem wärmeleitenden Kontakt. Das saugfähige Mittel (29) ist mit Wasser getränkt. Um das Getränk (28) abzukühlen, wird an den Anschluß (25) des Adapters (1) über einen (nicht gezeichneten) Schlauch eine (nicht gezeichnete) Handvakuumpumpe angeschlossen und mit dieser über die Saugleitung (13) Luft und nichtsorbierte Gase aus der Sorptionsmittelfüllung (10) angesaugt. Dadurch wird auch Luft aus dem Gefäß (6) abgesaugt, bis der Druck unter den Wasserdampfdruck gesunken ist. Ab diesem Zeitpunkt verdampft Wasser aus dem saugfähigen Mittel (29), kühlt sich selbst und das Getränk (28) über die Mantelfläche des doppelmantelartigen Gefäßes ab. Der abströmende Wasserdampf strömt vorbei am Abscheidemittel (18) entlang der Pfeile (27) in den Sorptionsmittel-Behälter(4) und wird hier in der Sorptionsmittelfüllung (10) sorbiert. Mit der Wasserdampfströmung werden gleichzeitig Luft und nichtsorbierte Gase aus der Arbeitsmitteldampfquelle (6) mitgerissen und in die Sorptionsmittelfüllung (10) eingetragen. Diese nichtsorbierten Gase und Luftbestandteile werden über die Öffnung (23) und die Saugleitung (13) von der Handvakuumpumpe bei Bedarf abgesaugt.

## Patentansprüche

1. Adapter (1) zum Ankoppeln eines Sorptionsmittel-Behälters (4) an eine Arbeitsmitteldampfquelle (6), mit einem Dichtsitz (3) zum vakuumdichten Ankoppeln des Sorptionsmittel-Behälters (4) und einer Dichtfläche (5) zum vakuumdichten Ankoppeln an die Arbeitsmitteldampfquelle (6), so daß ein nach außen abgeschlossener Strömungskanal (17) von der Arbeitsmitteldampfquelle (6) zum Sorptionsmittel-Behälter (4) entsteht, und mit einem Abscheidemittel (18), welches verhindert, daß durch den Strömungskanal (17) flüssige Arbeitsmittelpartikel von der Dampfströmung mitgerissen werden.

2. Adapter (1) nach Anspruch 1, dadurch gekennzeichnet,
daß der Grundkörper (2) des Adapters (1) scheibenförmig ausgebildet ist und auf der einen Seite den Dichtsitz (3) für den Sorptionsmittel-Behälter (4) aufweist und auf der gegenüberliegenden Seite die plane Dichtfläche (5) für das vakuumdichte Ankoppeln der Arbeitsmitteldampfquelle (6) angebracht ist.

3. Adapter (1) nach einem der vorangehenden Ansprüche, gekennzeichnet durch eine Haltevorrichtung (20, 21) zum Befestigen des Sorptionsmittel-Behälters(4).

4. Adapter (1) nach einem der vorangehenden Ansprüche, dadurch gekennzeichnet, daß das Abscheidemittel (18) ein Tropfenabscheider ist, der gleichzeitig geeignet ist, den Strömungskanal (17) zum Sorptionsmittel-Behälter (4) zu verschließen.

5. Adapter (1) nach einem der vorangehenden Ansprüche, gekennzeichnet durch ein Belüftungsventil (3, 26), welches beim Öffnen die Arbeitsmitteldampfquelle (6) belüftet.

6. Adapter (1) nach einem der vorangehenden Ansprüche, gekennzeichnet durch einen Anschluß (24, 25) für eine Absaugvorrichtung, über die aus der Sorptionsmittelfüllung (10) Luft und nicht-sorbierte Gase abgesaugt werden können.

7. Adapter (1) nach Anspruch 6, gekennzeichnet durch einen Sauganschluß (20) zum Ankoppeln einer Saugleitung (13), über welche aus dem Innern des Sorptionsmittel-Behälters Gase abgesaugt werden können..

8. Sorptions-Verfahren unter Verwendung eines Adapters (1) nach einem der vorangehenden Ansprüche, dadurch gekennzeichnet,
daß ein Sorptionsmittel-Behälter (4) mit einer Sorptionsmittelfüllung (10) vakuumdicht am Dichtsitz (3) und ein Gefäß vakuumdicht an der Dichtfläche (5) angelegt wird und daß über eine Absaugvorrichtung (15 oder 24, 25) Luft und nichtsorbierte Gase soweit abgesaugt werden, daß die im Gefäß befindlichen, flüssigen Substanzen (9) zu verdampfen beginnen, sich dadurch abkühlen und der Arbeitsmitteldampf über den Strömungskanal (17) in die Sorptionsmittelfüllung (10) strömt und von dieser exotherm sorbiert wird.

9. Verfahren nach Anspruch 8, dadurch gekennzeichnet,
daß das Gefäß ein saugfähiges Mittel (29) enthält, das flüssige Substanzen bindet.

10. Verfahren nach Anspruch 8 oder 9, dadurch gekennzeichnet,
daß die flüssige Substanz (9) durch Verdampfen so weit abgekühlt wird, daß sie erstarrt.

## Claims

1. Adaptor (1) for coupling a sorption medium container (4) to a working medium vapour source (6), with a sealing seat (3) for vacuum-tight coupling of the sorption medium container (4) and a sealing face (5) for vacuum-tight coupling to the working medium vapour source (6) so that an externally sealed flow channel (17) is formed from the working medium vapour source (6) to the sorption medium container (4), and with a separating means (18) which prevents liquid working medium particles being carried along by the stream of vapour through the flow channel (17).

2. Adaptor (1) according to claim 1, characterised in that the basic body (2) of the adaptor (1) is disc-shaped and on one side has the sealing seat (3) for the sorption medium container (4) and on the opposite side exhibits the flat sealing face (5) for vacuum-tight coupling of the working medium vapour source (6).

3. Adaptor (1) according to one of the preceding claims, characterised by a holding device (20, 21) for fixture of the sorption medium container (4).

4. Adaptor (1) according to one of the preceding claims, characterised in that the separating means (18) is a drop separator which is at the same time suitable for closing the flow channel (17) to the sorption medium container (4).

5. Adaptor (1) according to one of the preceding claims, characterised by a venting valve (3, 26) which vents the working medium vapour source (6) when opened.

6. Adaptor (1) according to one of the preceding claims, characterised by a connection (24, 25) for a suction device through which air and non-sorbed gases can be sucked out of the sorption medium filling (10).

7. Adaptor (1) according to claim 6, characterised by a suction connection (20) for coupling a suction line (13) through which gases can be sucked out of the inside of the sorption medium container.

8. Sorption process using an adaptor (1) according to one of the preceding claims, characterised in that a sorption medium container (4) with a sorption medium filling (10) is brought into vacuum-tight contact with the sealing seat (3) and a vessel is brought into vacuum tight contact with the sealing face (5) and in that air and non-sorbed gases are sucked out through a suction device (15 or 24, 25) so that the liquid substances (9) in the vessel begin to vaporise and cool in the process and the working medium vapour flows through the flow channel (17) into the sorption medium filling (10) and is sorbed exothermically by the latter.

9. Process according to claim 8, characterised in that the vessel contains an absorbent medium (29) which binds liquid substances.

10. Process according to claim 8 or 9, characterised in that the liquid substance (9) is cooled by vaporisation so that it solidifies.

## Revendications

1. Adaptateur (1) de couplage d'une cuve (4) d'agent de sorption à une source (6) de vapeur de fluide de travail, comprenant un siège (3) d'étanchéité pour coupler, de manière étanche au vide, la cuve (4) d'agent de sorption et une surface (5) d'étanchéité, pour le couplage, de manière étanche au vide, à la source (6) de vapeur de fluide de travail, de manière à créer un canal (17) d'écoulement fermé vis-à-vis de l'extérieur de la source (6) de vapeur de fluide de travail à la cuve (4) d'agent de sorption, et un moyen (18) de séparation, qui empêche que des particules liquides de fluide de travail soient entraînées par le courant de vapeur dans le canal (17) d'écoulement.

2. Adaptateur (1) selon la revendication (1) caractérisé
en ce que l'embase (2) de l'adaptateur (1) est en forme de disque et comporte d'un côté le siège (3) d'étanchéité pour la cuve (4) d'agent de sorption et du côté opposé est ménagée la surface (5) plane d'étanchéité pour le couplage, de manière étanche au vide, de la source (6) de vapeur de fluide de travail.

3. Adaptateur (1) selon l'une des revendications précédentes, caractérisé par un dispositif (20, 21) de maintien, destiné à fixer la cuve (4) d'agent de sorption.

4. Adaptateur (1) selon l'une des revendications précédentes, caractérisé en ce que le moyen (18) de séparation est un séparateur de gouttelettes, qui convient en même temps pour fermer le canal (17) d'écoulement en direction de la cuve (4) d'agent de sorption.

5. Adaptateur (1) selon l'une des revendications précédentes, caractérisé par une soupape (3, 26) de mise à l'atmosphère qui, lorsqu'elle est ouverte, met la source (6) de vapeur de fluide de travail à l'atmosphère.

6. Adaptateur (1) selon l'une des revendications précédentes, caractérisé par un raccord (24, 25) pour un dispositif d'aspiration, par lequel l'air et des gaz non sorbés provenant du garnissage (10) en agent de sorption peuvent être aspirés.

7. Adaptateur (1) selon la revendication 6, caractérisé par un raccord (20) d'aspiration, pour coupler un conduit (13) d'aspiration, par lequel des gaz peuvent être aspirés de l'intérieur de la cuve d'agent de sorption.

8. Procédé de sorption en utilisant un adaptateur (1) selon l'une des revendications précédentes, caractérisé
en ce qu'une cuve (4) d'agent de sorption ayant un garnissage (10) d'agent de sorption est appliquée, de manière étanche au vide, sur un siège (3) d'étanchéité et une enceinte est appliquéee, de manière étanche au vide, à la surface (5) d'étanchéité et en ce que, par un dispositif (15 ou 24, 25) d'aspiration, de l'air et des gaz non sorbés sont aspirés jusqu'à ce que les substances (9) liquides se trouvant dans l'enceinte commencent à s'évaporer et ainsi à se refroidir et jusqu'à ce que la vapeur de fluide de travail s'écoule par le canal (17) d'écoulement dans le garnissage (10) d'agent de sorption et soit sorbée par celui-ci exothermiquement.

9. Procédé selon la revendication 8, caractérisé en ce que l'enceinte comporte un moyen (29) absorbant, qui fixe des substances liquides.

10. Procédé selon la revendication 8 ou 9, caractérisé en ce que la substance (9) liquide est refroidie par évaporation jusqu'à se solidifier.
